# EUROPÄISCHE PATENTSCHRIFT

(11) **EP 3 774 602 B1**
(45) Veröffentlichungstag und Bekanntmachung des Hinweises auf die Patenterteilung: **30.08.2023**
(21) Anmeldenummer: 19709901.3
(22) Anmeldetag: 07.03.2019
(51) Int. Cl.: B65G 23/08, B65G 39/12, B65G 23/32, B65G 23/36, B65G 23/44

(54) **TRAGROLLENGESTELL MIT SCHWENKRAHMEN FÜR EINE FÖRDERBANDANLAGE**
SUPPORT-ROLL STAND COMPRISING A PIVOTING FRAME FOR A BELT CONVEYOR SYSTEM
CHÂSSIS DE ROULEAUX DE SUPPORT MUNI D'UN CADRE PIVOTANT DESTINÉ À UN SYSTÈME DE BANDE TRANSPORTEUSE

(30) Priorität: 26.03.2018 DE 102018107127
(43) Veröffentlichungstag der Anmeldung: 17.02.2021
(73) Patentinhaber: Artur Küpper GmbH & Co. KG, 42553 Velbert (Tönisheide) (DE); Schaeffler Technologies AG & Co. KG, 91074 Herzogenaurach (DE)
(72) Erfinder: GROPP, Holger, 97353 Wiesentheid (DE); MOTZKAU, Uwe, 97941 Tauberbischofsheim (DE); SCHWANDTKE, Rolf, 42549 Velbert (DE)
(74) Vertreter: Meyer, Rudolf
(86) Internationale Anmeldenummer: PCT/EP2019/055701
(87) Internationale Veröffentlichungsnummer: WO 2019/185322

(56) Entgegenhaltungen:
- WO-A1-2013/143550
- WO-A1-2017/068055
- WO-A2-2007/087997
- DE-C1- 3 903 971
- GB-A- 2 012 700
- US-A- 3 407 673
- US-A- 3 880 275
- US-A1- 2017 201 140

## Beschreibung

Die Erfindung betrifft ein für eine Förderbandanlage geeignetes, einen Schwenkrahmen aufweisendes Tragrollengestell nach dem Oberbegriff der Ansprüche 1 und 2.

Ein derartiges Tragrollengestell ist aus der WO 2017/068055 A1 bekannt. Die WO 2017/068055 A1 offenbart die Merkmale des Oberbegriffs der Ansprüche 1 und 2.

Am Schwenkrahmen des bekannten Tragrollengestells befinden sich zwei Tragrollen, welche elektrisch angetrieben sein können. Insbesondere können die Tragrollen einen elektrischen Eigenantrieb aufweisen.

Mögliche Bauformen von Spannvorrichtungen für Förderbandanlagen sind zum Beispiel in den Dokumenten WO 2013/143550 A1 und US 3 407 673 A beschrieben. Rollen zum Spannen von Bändern sind in diesen Fällen linear verschiebbar.

Eine lange Förderbandanlage umfasst typischerweise mehrere Tragrollengestelle, welche hintereinander angeordnet sind. In den einzelnen Tragrollengestellen sind beispielsweise jeweils drei oder vier trogartig zueinander angeordnete Tragrollen drehbar gelagert. Ist eine Tragrolle angetrieben, so handelt es sich dabei um einen Zwischenantrieb der Förderbandanlage.

Eine mögliche Bauform eines Tragrollenantriebs für eine Bandförderanlage ist in der DE 10 2014 216 733 A1 offenbart. Bei diesem Tragrollenantrieb ist eine als Antriebsrolle fungierende Tragrolle über eine Kupplung mit einem Elektromotor gekoppelt.

Die US 3,880,275 A offenbart ein Tragrollengestell als im Querschnitt U-förmige Vorrichtung zum Tragen sowie zum Antrieb eines Förderbandes. Mindestens eine von mehreren Rollen der Vorrichtung nach der US 3,880,275 A kann einen eigenen, an die betreffende Rolle angesetzten Antrieb aufweisen. Der Antrieb befindet sich hierbei in gerader Verlängerung der anzutreibenden Rolle.

In der DE 2 146 218 C ist eine Muldenförderbandanlage offenbart, bei welcher ein Förderband mit Hilfe mehrerer sogenannter Girlanden geführt wird. Jede Girlande weist in diesem Fall mindestens eine mittlere Tragrolle sowie zwei seitliche Rollenpaare auf. Die Tragrollen können durch Aufsteckmotoren angetrieben oder als Trommelmotoren ausgebildet sein.

Ein möglicher Antrieb einer Rolle, welche zum Antrieb einer Förderbahn vorgesehen ist, ist in der EP 0 300 127 B1 beschrieben. Hierbei sind eine Elektromotoranordnung und eine Getriebeanordnung im Inneren einer Antriebsrolle angeordnet.

Eine weitere Antriebseinheit für eine Transportrolle ist in der EP 3 034 437 A1 offenbart. In diesem Fall kann ein elektrischer Antrieb je nach Ausgestaltung der Antriebseinheit entweder als getriebeloser Außenläufermotor ausgebildet sein oder mit einem Getriebe zusammenwirken.

Aus der US 2017/0201140 A1 ist ein Direktantriebssystem bekannt, welches einen als dreiphasigen Außenläufermotor ausgebildeten Elektromotor umfasst, der mit einer anzutreibenden Walze gekoppelt ist. Das Direktantriebssystem ist insbesondere zum Antrieb eines endlosen Bandes vorgesehen.

Die WO 2007/087997 A2 offenbart eine Antriebtrommel eines Gurtbandförderers. In diesem Fall ist innerhalb eines Trommelmantes ein Motor angeordnet, welcher über einen mantelseitigen Motorrahmen am Trommelmantel und über einen feststehenden achsseitigen Motorrahmen an einer feststehenden Trommelachse befestigt ist.

Ein Verfahren zum Betrieb einer Förderbandanlage mit verteilt angetriebenen Tragrollen ist in der DE 10 2014 107 591 A1 beschrieben. Im Rahmen dieses Verfahrens werden angetriebene Tragrollen mittels dezentraler Steuerungen, die mittels einer hierarchisch aufgebauten Steuerungsstruktur miteinander vernetzt sind, betrieben.

Ein in der CH 440 123 beschriebener Bandförderer umfasst einen Treibriemen sowie ein endloses Förderband, welches den Treibriemen umschließt und von diesem angetrieben wird.

Ein Langstreckenförderer mit einem Förderband und mehreren Mitnahmebändern, das heißt Treibriemen, ist in der DE 1 178 359 B beschrieben.

Ein weiterer Zwischenantrieb für endlose Gurtförderbänder ist in der DE 26 43 559 A1 beschrieben. Auch in diesem Fall liegen mehrere, jeweils endlose Antriebsbänder zwischen Ober- und Untertrum eines Gurtförderbandes.

Aus der DE 203 05 351 U1 ist ein Treibgurt-Traggurt-Antrieb bekannt, bei welchem mehrere Antriebstrommeln jeweils über Kegelstirnradgetriebe mit einem Antriebsmotor gekoppelt sind.

Der Erfindung liegt die Aufgabe zugrunde, ein gegenüber dem Stand der Technik weiterentwickeltes Tragrollengestell mit mindestens einer angetriebenen Rolle anzugeben, welches sich durch eine besonders hohe Robustheit bei zugleich kompaktem, montagefreundlichen Aufbau auszeichnet.

Diese Aufgabe wird erfindungsgemäß gelöst durch ein Tragrollengestell mit den Merkmalen des Anspruchs 1. Ebenso wird die Aufgabe gelöst durch ein Tragrollengestell mit den Merkmalen des Anspruchs 2. Das Tragrollengestell weist in an sich bekannter Grundkonzeption einen Schwenkrahmen auf, an welchem mindestens zwei Tragrollen, insbesondere genau zwei Tragrollen, gelagert sind, wobei zumindest eine dieser Tragrollen einen elektrischen Eigenantrieb aufweist. Optional weist das Tragrollengestell zusätzlich zwei den Schwenkrahmen flankierende, zum Schwenkrahmen geneigt angeordnete, nicht angetriebene seitliche Tragrollen auf. Die seitlichen Tragrollen bilden zusammen mit den am Schwenkrahmen gelagerten Tragrollen eine Trogform.

Erfindungsgemäß ist der elektrische Eigenantrieb der Tragrolle als getriebeloser Antrieb, das heißt als elektrischer Direktantrieb, ausgebildet. Unter einem elektrischen Direktantrieb wird ein Antrieb verstanden, bei welchem das angetriebene Teil, im vorliegenden Fall eine Tragrolle, drehfest mit dem Rotor des Elektromotors verbunden oder unmittelbar als Rotor des Elektromotors ausgebildet ist.

Zur Abgrenzung des Begriffs Direktantrieb gegenüber sonstigen, indirekten Antrieben, wird auf die DE 202 05 428 U1 verwiesen. Hierin wird für den Antrieb eines Förderbandes eine kompakte Antriebseinheit in Form eines Getriebemotors vorgeschlagen. Eine solche Antriebseinheit soll einen Direktantrieb eines Riemens ermöglichen. Da ein Getriebemotor jedoch definitionsgemäß ein Getriebe umfasst, handelt es sich hierbei nicht um einen elektrischen Direktantrieb im Sinne der vorliegenden Erfindung, sondern um einen indirekten Antrieb.

Im Fall des erfindungsgemäßen Tragrollengestells ist der getriebelose Antrieb, das heißt Direktantrieb, vorzugsweise in Form eines Außenläufermotors mit einem drehfest mit dem Mantel der Tragrolle verbundenen Hohlrotor ausgebildet, wobei der zugehörige Stator im Inneren der Tragrolle liegt. Beispielsweise handelt es sich bei dem getriebelosen Antrieb um einen permanentmagneterregten Direktantriebsmotor. Ein solcher Direktantriebsmotor bietet gute Möglichkeiten der Drehzahlregelung und zeichnet sich durch ein gutes Verhältnis zwischen beanspruchtem Bauraum und erzielbarem Drehmoment aus. Zudem ist keine Stromzuführung zu rotierenden Teilen notwendig. Unabhängig von der Bauart des Elektromotors sind durch den Entfall eines Getriebes gute Voraussetzungen für einen Tragrollenantrieb mit besonders hohem Wirkungsgrad gegeben.

Gemäß einer möglichen Ausgestaltung sind die am Schwenkrahmen angebrachten Tragrollen jeweils an Armen gelagert, welche schwenkbar an Seitenteilen des Schwenkrahmens angelenkt sind. Diese geometrische Gestaltung entspricht im Prinzip der aus der WO 2017/ 068055 A1 (siehe dortige Figur 2) bekannten Gestaltung. Die Aussage, dass die Arme schwenkbar an den Seitenteilen des Schwenkrahmens angelegt sind, impliziert nicht zwangsläufig, dass die Arme, an welchen die Tragrollen gelagert sind, unmittelbar an den Seitenteilen gelagert sind. Vielmehr sind mit gleicher Funktion auch Bauformen realisierbar, bei welchen die Arme an sonstigen Teilen, beispielsweise an die Seitenteile miteinander verbindenden Quertraversen, schwenkbar gelagert sind.

Statt einer Lagerung der Tragrollen an schwenkbaren Armen ist auch eine Lagerung der Tragrollen an einem in sich starren oder an einem verstellbaren Schwenkrahmen, beispielsweise einem rechteckigen Rahmen mit verstellbarer Seitenlänge, möglich. Unabhängig von der Art der Anbringung der Tragrollen können die beiden im Schwenkrahmen gelagerten Tragrollen jeweils elektrisch direkt angetrieben und elektronisch miteinander synchronisiert sein. Das anzutreibende Förderband kann in diesem Fall direkt auf den Tragrollen aufliegen. Eine elektrische Synchronisation der Tragrollen bedeutet, dass eine separate Regelung der Tragrollen existiert, wobei die Regelungen voneinander abhängig sind. Auf diese Weise wird Schlupf beim Betrieb der Förderbandanlage vermieden. Jede angetriebene, in die Synchronisation mit vernetzter Steuerung eingebundene Tragrolle hat eine eingebaute Sensorik, was die Winkelstellung und/oder Winkeländerung der betreffenden Tragrolle betrifft.

Die im Schwenkrahmen gelagerten Tragrollen sind von einem Antriebsgurt umschlungen. Das anzutreibende Förderband liegt auf dem Antriebsgurt auf. Ein Antrieb des Antriebsgurtes ist bereits mit einer einzigen angetriebenen Tragrolle möglich. Alternativ kann ein Antrieb beider Tragrollen vorgesehen sein, wobei in der beschriebenen Weise eine Synchronisation der Antriebe der einzelnen Tragrollen erfolgt.

Durch den um die Tragrollen gelegten Antriebsgurt ist die Kontaktfläche zum anzutreibenden Förderband im Vergleich zu einem Tragrollengestell, welches angetriebene Tragrollen aufweist, auf denen das Förderband direkt aufliegt, um ein Vielfaches vergrößert, was einen besonders hohen Leistungseintrag in das Förderband ermöglicht. Zudem begünstigt der große Umschlingungswinkel um die Tragrolle, das heißt der ausgedehnte Kontaktbereich zwischen Tragrolle und Antriebsgurt, einen hohen Leitungseintrag in das Förderband.

Die vergrößerte Kraftübertragungsfläche hat bei verschiedensten Betriebszuständen enorme Vorteile gegenüber Antriebsvorrichtungen mit direktem Kontakt zwischen Tragrolle und Förderband. Beispielsweise wird beim Bandanlauf, insbesondere bei geringer oder fehlender Belastung des Förderbandes durch zu förderndes Gut, ein Durchrutschen mit hoher Zuverlässigkeit vermieden. Selbst unter ungünstigen Umgebungsbedingungen wie extrem tiefen Temperaturen, die die Flexibilität des Förderbandes deutlich herabsetzen, bleibt eine ausreichende Fähigkeit der Kraftübertragung zwischen dem Antriebsgurt und dem Förderband erhalten.

Auch für das Abbremsen des Förderbandes, beispielsweise bei einer Notfallbremsung, ist das Tragrollengestell, welches großflächig, nämlich über einen Antriebsgurt, Kraft auf das Förderband überträgt, besonders gut geeignet. Auch bei einer Notfallbremsung ist es möglich, das gesamte Förderband dezentral über die Tragrollen abzubremsen. Im Vergleich zu herkömmlichen Förderbandanlagen sind aufgrund dieser dezentralen Bremsfunktion lediglich moderate Qualitätsanforderungen durch das Förderband zu erfüllen. Beim Bremsvorgang ist eine Energierückgewinnung durch die Direktantriebsmotoren realisierbar.

Im Normalbetrieb der Förderbandanlage wirkt sich der Antriebsgurt durch den geringen bis fehlenden Schlupf verschleißmindernd auf das Förderband aus. Auch der Antriebsgurt selbst sowie die direkt angetriebenen Tragrollen, welche Antriebsleistung auf den Antriebsgurt übertragen, sind nur in geringem Maße Verschleiß ausgesetzt. Dies gilt auch bei betriebstypischen Belastungen, welche durch abrasives Material wie Sand oder Staub gegeben sein können. Insgesamt sind die Standzeiten sowohl des Förderbandes als auch des Tragrollenmantels im Vergleich zu konventionellen Lösungen deutlich gesteigert. Hierbei wirken sich insbesondere die geringen Flächenpressungen zwischen Antriebsgurt und Förderband sowie die aufgrund des großen Umschlingungswinkels ebenfalls reduzierten Flächenpressungen zwischen Tragrolle und Antriebsriemen, verglichen mit Flächenpressungen, welche zwischen einem Förderband und einer dieses unmittelbar antreibenden Tragrolle auftreten, positiv aus. Der großflächige Kontakt zwischen dem Antriebsgurt und dem Förderband sorgt zudem dafür, dass sich das Förderband im Bereich der Stützung und des Antriebs durch das Tragrollengestell lediglich geringfügig verformt, was eine nur geringe Walkarbeit sowohl im Fördergut als auch im Förderband sowie im Antriebsgurt bedeutet.

Grundsätzlich ist eine Beschichtung der Oberfläche der direkt angetriebenen Tragrolle möglich. Die Parameter einer solchen Beschichtung sind in Abhängigkeit des Kontaktes zwischen der Tragrolle und dem Antriebsgurt zu bestimmen. Da die Belastungen an dieser Stelle, wie erläutert, geringer als bei einem Kontakt zwischen Tragrolle und Förderband sind, ergeben sich entsprechend reduzierte Anforderungen an die Beschichtung, was sowohl einer rationellen Herstellung als auch einer hohen Standzeit zu Gute kommt. Als zur Beschichtung der Tragrolle geeignete Materialien sind beispielhaft Polyurethan, Gummi und Keramik zu nennen.

Unabhängig vom Vorhandensein einer Beschichtung der Tragrolle ist deren Oberfläche in Abhängigkeit von den im Einzelfall auftretenden Belastungen, was sowohl mechanische Belastungen als auch umgebungsbedingte Einflüsse, beispielsweise durch Feuchtigkeit, einschließt, auszulegen. Die gegebenenfalls durch eine Beschichtung gebildete Oberfläche der Tragrolle kann beispielsweise glatt, rau, oder in definierter Weise strukturiert, zum Beispiel mit Noppen versehen, sein. Der prinzipielle Aufbau des elektrischen Direktantriebs der Tragrolle ist hiervon grundsätzlich unabhängig.

Um den Antriebsgurt in Axialrichtung der angetriebenen Tragrollen, das heißt quer zur Förderrichtung des Förderbandes, zu führen, können die Mantelflächen der Tragrollen ballig geformt sein, was einen Selbstzentrierungseffekt ergibt. Zusätzlich oder statt einer solchen Selbstzentrierung ist eine Führung durch zusätzliche Führungsrollen möglich. Auch eine seitliche Führung des Antriebsgurtes durch Formelemente, beispielsweise Anlageschultern, am Tragrollenmantel ist möglich.

Die Spannung des um die Tragrollen gelegten Antriebsgurtes ist mit Hilfe verschiedener Mechanismen möglich:
Beispielsweise ist die effektive Seitenlänge des Schwenkrahmens verstellbar, um den Antriebsgurt auf Spannung zu halten. Sofern an den Seitenteilen des Schwenkrahmens Arme angelenkt sind, an welchen die Tragrollen gelagert sind, kann zum Beispiel die effektive Länge dieser Arme verstellbar sein. Ebenso ist eine Verstellvorrichtung unmittelbar in ein offenes Aufnahmeende eines starren Seitenteils, in welches eine Tragrolle einzuschieben ist, integrierbar, wobei die Rotationsachse der Tragrolle in frei wählbarer Position fixierbar ist.

Allgemein werden Vorrichtungen, die dazu vorgesehen sind, den Antriebsgurt auf Spannung zu halten, als Gurtspannvorrichtungen bezeichnet. Hierunter fallen sowohl Vorrichtungen mit automatischer Nachspannung als auch Vorrichtungen, die eine Änderung der Einstellung durch den Benutzer erfordern. Eine einfache automatische Nachspannung ist zum Beispiel mittels einer federnden Lagerung von Rollen, im Extremfall bereits einer einzigen Rolle, realisierbar. Insbesondere kann eine Tragrolle federnd innerhalb des Tragrollengestells gelagert sein, wobei eine auf die Tragrolle wirkende Federkraft in Förderrichtung der Förderbandanlage ausgerichtet ist.

In diversen Ausführungsformen, unter anderem in Bauformen, in welchen sich die Rotationsachsen der Tragrollen in festgelegter Position relativ zum Schwenkrahmen befinden, ist eine Einstellung der Spannung des Antriebsgurtes beispielsweise durch mindestens eine Spannrolle veränderbar. Die Spannrolle ist somit Teil der Gurtspannvorrichtung. Der Mechanismus, welcher die Position der Spannrolle in Relation zu nicht verstellbaren Teilen des Tragrollengestells verändert, um die Spannung des Antriebsgurtes zu variieren, wird allgemein als Rollenspannvorrichtung bezeichnet. Somit ist jede Art von Rollenspannvorrichtung definitionsgemäß Teil einer Gurtspannvorrichtung. Umgekehrt umfasst eine Gurtspannvorrichtung jedoch nicht notwendigerweise eine Rollenspannvorrichtung, da Gurtspannvorrichtungen auch, wie erwähnt, auch ohne Verwendung gesonderter Spannrollen aufgebaut sein können. Eine Rollenspannvorrichtung kann als manuell einstellbare oder automatische Spannvorrichtung ausgebildet sein.

In besonders bevorzugter Ausgestaltung sind zwei Spannrollen als Komponenten einer Gurtspannvorrichtung jeweils neben der Schwenkachse des Schwenkrahmens, insbesondere spiegelbildlich zur Schwenkachse des Schwenkrahmens, angeordnet, wobei die Positionierung jeder Spannrolle variierbar ist. Die einzelnen Spannrollen können beispielsweise angefedert und/oder rastend fixierbar sein. Eine Führung des Antriebsgurtes wird optional durch Führungsscheiben an den Spannrollen unterstützt.

Der gesamte Schwenkrahmen kann höhenverstellbar sein, insbesondere in Form einer automatischen Höhenverstellung, womit die erforderliche Kontaktpressung zum anzutreibenden Förderband herstellbar oder einstellbar ist. Hierbei ist beispielsweise der Schwenkrahmen auf Schraubenfedern gelagert, welche auf einer Traverse angebracht sind. Diese Traverse ist zum Beispiel in ein Obertrumgestell einer Förderbandanlage einhängbar. Ebenso kann eine Höhenverstellung lediglich der Tragrollen vorgesehen sein. Dies kann entweder durch einen aktiven, beispielsweise elektromotorischen Verstellmechanismus oder durch einen passiven Mechanismus, insbesondere Federmechanismus, welcher zum Beispiel Drehstabfedern oder Schenkelfedern umfasst, erfolgen.

Sofern das Tragrollengestell zusätzlich zu den am Schwenkrahmen gelagerten Tragrollen weitere, seitliche Tragrollen umfasst, können die Rotationsachsen der insgesamt vier Tragrollen, nämlich zwei waagrecht, hintereinander angeordneten Tragrollen und zwei seitlichen, schräg gestellten Tragrollen, in unterschiedlicher Weise relativ zueinander verstellbar beziehungsweise fest positioniert sein:
Zum einen sind Bauformen realisierbar, bei welchen die waagrechten, am Schwenkrahmen gelagerten Tragrollen, von welchen mindestens eine elektrisch direkt angetrieben ist, samt Schwenkrahmen gegenüber einem auch als Standrahmen bezeichneten Gestell, in welchem die schräg gestellten Tragrollen gelagert sind, kippbar sind. Der Schwenkrahmen ist hierbei entweder mittig oder außermittig aufgehängt. Im letztgenannten Fall sind die Tragrollen, welche am Schwenkrahmen gelagert sind, nicht spiegelbildlich zur Schwenkachse angeordnet. Entsprechendes kann für die Spannrollen gelten. Durch eine solche asymmetrische Gestaltung sind Effekte, welche aus der Förderbandbewegungsrichtung resultieren, zumindest teilweise kompensierbar.

Zum anderen können vier oder mehr Tragrollen in der Art einer sogenannten Girlande miteinander gekoppelt sein. Zum technischen Hintergrund wird in diesem Zusammenhang auf das Dokument DE 20 2013 011 823 U1 verwiesen. Die Gestaltung des Tragrollengestells in der Art einer Girlande ermöglicht die Variation der Winkel zwischen den seitlichen, flankierenden Tragrollen, und den mittigen, im Wesentlichen horizontalen Tragrollen derart, dass sich der Muldungswinkel verändert. In dieser Bauart können zum Beispiel Schraubenfedern am Rand des Rahmens, das heißt der Girlande, neben den seitlichen Tragrollen befestigt sein, um die gesamte Girlande in flexibler Weise anzuheben. Durch die gefederte Aufhängung der Girlande ist bei allen Belastungszuständen, auch bei geringer oder fehlender Fördergutbeladung, ein für die Übertragung von Antriebs- oder Bremsleistung ausreichender Kontakt zum Förderband hergestellt.

Zwischen rotierenden und nicht rotierenden Teilen einer Tragrolle mit elektrischem Direktantrieb können Dichtungen prinzipiell bekannter Bauart eingesetzt sein. Entsprechendes gilt für Tragrollen ohne Antrieb. In diesem Zusammenhang wird beispielhaft auf das Dokument DE 10 2015 115 831 A1, welches eine Tragrolle mit Labyrinthdichtungen sowie zusätzlichen, schleifenden Ringdichtungen zeigt, hingewiesen. Mit Hilfe derartiger Dichtungen sind besonders lange Standzeiten sämtlicher mechanischer, auch angetriebener Komponenten des Tragrollengestells erreichbar.

Im Vergleich zu herkömmlichen, nicht angetriebenen Tragrollen hat der elektrische Direktantrieb keine Auswirkungen auf Breite und Durchmesser der im Tragrollengestell aufgenommenen, direkt angetriebenen Tragrollen. Die Kühlung des Direktantriebsmotors ist als passive Kühlung ausführbar. Auch eine erweiterte Sensorik zur Steuerung und

Überwachung des Direktantriebsmotors sowie der Lagerungen, insbesondere Wälzlagerungen, welche eine Drehzahl-, Temperatur- und Kraftmessung umfassen kann, ist innerhalb der Tragrolle integrierbar und damit sowohl raumsparend untergebracht als auch vor Umgebungseinflüssen geschützt.

Das Tragrollengestell ist beispielsweise in ausgedehnten Förderbandanlagen im Über- oder Untertagebau einsetzbar. Durch eine Mehrzahl an Tragrollengestellen mit jeweils mindestens einer angetriebenen Tragrolle können zentrale Antriebsstationen von Förderbandanlagen ergänzt oder ersetzt werden. Bei vorhandenen Anlagen können im Sinne eines Anlagen-Retrofits Modifikationen, welche die Förderleistung deutlich erhöhen, durch das Nachrüsten von Schwenkrahmen mit angetriebenen Tragrollen vorgenommen werden.

Tragrollengestelle mit direkt angetriebenen Tragrollen sind vorzugsweise mit solcher Leistung und Anzahl in eine Förderbandanlage integriert, dass eine Redundanz des Antriebs gegeben ist, das heißt die Funktionsfähigkeit der Anlage auch bei Ausfall des Antriebs oder der Antriebe eines einzelnen Tragrollengestells erhalten bleibt.

Durch die dezentrale Einspeisung von Leistung mittels direkt angetriebener Tragrollen, welche in Tragrollengestelle mit Schwenkrahmen integriert sind und die Kippbarkeit des Schwenkrahmens in keiner Weise beeinträchtigen, ist eine hohe Variabilität einer Förderbandanlage, insbesondere was Versetzen oder Verlängern der Anlage betrifft, gegeben, womit insgesamt - einschließlich Umbauphasen - eine sehr hohe Verfügbarkeit der Förderbandanlage erzielt wird.

Von besonderem Vorteil ist die Tatsache, dass eine Förderbandanlage mit gleichbleibendem Förderbandquerschnitt und unveränderter Förderbandqualität nachträglich verlängert werden kann. Der in Relation zur Ausdehnung der Förderbandanlage geringe Förderbandquerschnitt geht einher mit einer geringen Förderbandspannung, was geringe Kurvenradien innerhalb der Förderbandanlage ermöglicht.

Nachfolgend werden mehrere Ausführungsbeispiele der Erfindung sowie ein nicht beanspruchtes Vergleichsbeispiel anhand einer Zeichnung näher erläutert. Hierin zeigen, teils vereinfacht:
- Fig. 1: ein nicht beanspruchtes Tragrollengestell in perspektivischer Ansicht,
- Fig. 2: ein Ausführungsbeispiel eines Tragrollengestells in einer Ansicht analog Figur 1,
- Fig. 3: ein Detail des Tragrollengestells nach Figur 2,
- Fig. 4: ein Tragrollengestell mit Spannvorrichtung für einen Antriebsgurt,
- Fig. 5: in schematisierter Darstellung Komponenten eines Tragrollenantriebs.

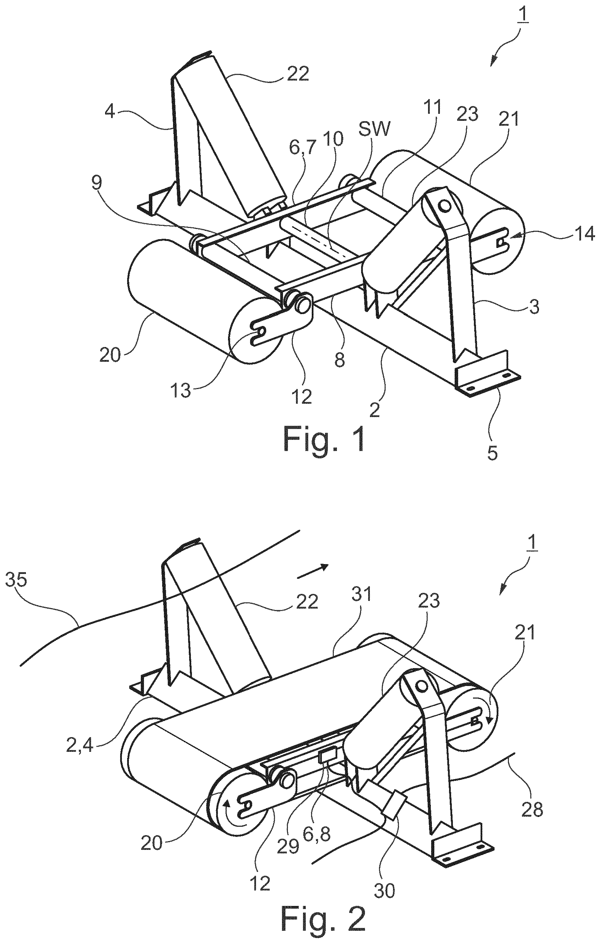

Die folgenden Erläuterungen beziehen sich, soweit nicht anders angegeben, auf sämtliche Ausführungsbeispiele (Fig. 2 bis 5) sowie auf das Vergleichsbeispiel nach Fig. 1. Einander entsprechende oder prinzipiell gleichwirkende Teile sind in allen Figuren mit den gleichen Bezugszeichen gekennzeichnet.

Ein insgesamt mit dem Bezugszeichen 1 gekennzeichnetes Tragrollengestell ist zum Antrieb eines lediglich in Figur 2 angedeuteten, mit 35 bezeichneten Förderbandes vorgesehen. Hinsichtlich der prinzipiellen Funktion des Tragrollengestells 1 wird auf den eingangs zitierten Stand der Technik, insbesondere das von den Anmeldern stammende Dokument WO2017/068055 A1, verwiesen. Das Tragrollengestell 1, welches auch als Schwenkrahmeneinheit bezeichnet wird, kann eine herkömmliche, im Obertrum angeordnete Tragrolle ersetzen.

Ein Standblech 2 bildet zusammen mit Halteblechen 3, 4 und weiteren fest mit dem Standblech 2 verbundenen Teilen einen Standrahmen 5, in welchem ein Schwenkrahmen 6 kippbar gelagert ist. Die entsprechende Schwenkachse ist mit SW bezeichnet. Grundsätzlich kann mit dem Schwenkrahmen 6 eine beliebige, in einer Förderbandanlage vorhandene Gestellform bestückt werden.

Der Schwenkrahmen 6 hat eine rechteckige Grundform und weist zwei Seitenteile 7, 8 auf, welche in den Ausführungsbeispielen als U-Profile ausgeführt sind. Die Seitenteile 7, 8 sind durch Querstücke 9, 10, 11 miteinander verbunden, wobei die Mittelachse des Querstücks 10 mit der Schwenkachse SW zusammenfällt. An den Enden der Seitenteile 7, 8 sind diese in den Varianten nach den Figuren 1, 2, 3, 5 gelenkig mit Armen 12 gekoppelt, wobei die entsprechenden Schwenkachsen, um welche die Arme 12 schwenkbar sind, als Einstellachsen EA bezeichnet werden. Auf die Arme 12 wird beispielsweise durch nicht dargestellte Federn ein Drehmoment ausgeübt. Alternativ sind starre Verbindungen zwischen den Armen 12 und den Seitenteilen 7, 8 möglich.

Die Enden der Arme 12 sind als Gabelaufnahmen 14 ausgeführt, welche auch als Halteschlitze bezeichnet werden. In jedem Halteschlitz 14 ist ein Achsende 13 einer Tragrolle 20, 21 aufgenommen, welche direkt oder indirekt das Förderband 35 trägt. Die Achsenden 13 stellen die Naben der Tragrollen 20, 21 dar oder sind fest mit der Nabe der jeweiligen Tragrolle 20, 21 verbunden. Die Tragrollen 20, 21 sind damit am Schwenkrahmen 6 gelagert. In entsprechender Weise sind seitliche Tragrollen 22, 23 am Standrahmen 5 gelagert. Insgesamt wird damit durch das Tragrollengestell 1 eine Trogform, das heißt Muldenform, des Förderbandes 35 unterstützt.

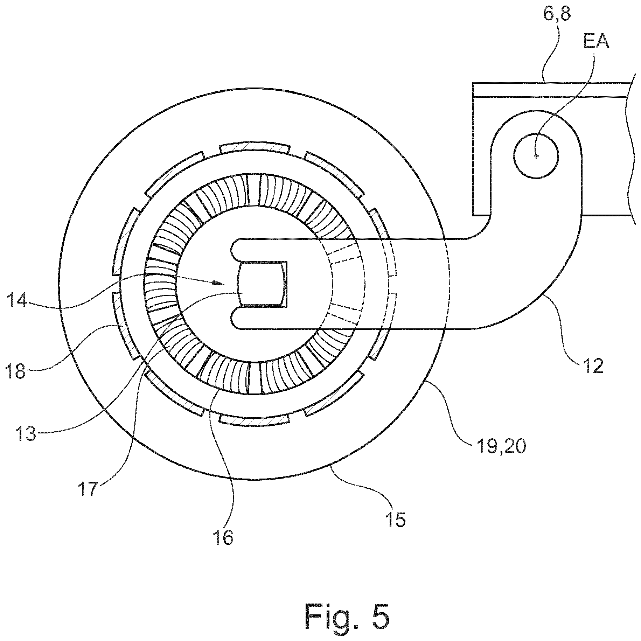

Das Tragrollengestell 1 ist nicht nur zur Führung, sondern auch zum Antrieb des Förderbandes 35 ausgebildet. Zu diesem Zweck ist mindestens eine der Tragrollen 20, 21 elektrisch angetrieben. Details dieses Antriebs, welcher für sämtliche Ausführungsbeispiele nach den Figuren 1 bis 4 geeignet ist, sind in Figur 5 veranschaulicht.

Das Achsende 13 und damit die gesamte Achse der Tragrolle 20, 21 ist fest mit einem Stator 16 eines Elektromotors verbunden. In dem in Figur 5 skizzierten Fall ist eine Verdrehsicherung des Stators 16 durch eine Schlüsselweite am Achsende 13 und den entsprechend konturierten Halteschlitz 14 gegeben. Der Rotor 19 ist im Ausführungsbeispiel mit Permanentmagneten 18 bestückt. Die in Fig. 5 erkennbare Einstellachse EA ist nur optional vorhanden.

Zwischen dem Rotor 19 und dem mit 15 bezeichneten Tragrollenmantel der Tragrolle 20 ist eine drehfeste Verbindung hergestellt, sodass der Tragrollenmantel 15 elektrisch direkt, das heißt getriebelos, angetrieben wird. Aufgrund der Gestaltung des Rotors 19 als permanentmagnetbestückter Außenläufer ist keine Stromzuführung zum Rotor 19 erforderlich. Der Tragrollenmantel 15 ist mittels nicht dargestellter Lager, insbesondere Wälzlager, gelagert. Eine gesonderte Lagerung des Rotors 19 ist nicht vorhanden.

In der Bauform nach Figur 1 sind beide Tragrollen 20, 21, welche am Schwenkrahmen 6 gelagert sind, elektrisch direkt angetrieben. Das in Figur 1 nicht dargestellte Förderband 35 liegt direkt auf den Tragrollen 20, 21 auf.

Im Unterschied hierzu ist in den Ausgestaltungen nach den Figuren 2 bis 4 ein Antriebsgurt 31 um die Tragrollen 20, 21 gelegt. In Figur 2 sind ferner Kabel 28 sowie elektrische Verbindungselemente 29, 30 erkennbar, welche die Energiezuführung zu den angetriebenen Tragrollen 20, 21 sowie eine Signalübertragung ermöglichen.

Der Antriebsgurt 31 kann in Form einer leichten Gurtmuldung geführt sein, womit eine vergrößerte Kontaktfläche zum Förderband 35 hergestellt ist, was mit einer Übertragbarkeit größerer Kräfte einhergeht. Im Vergleich zu der in Fig. 2 gezeigten Bauform kann der Abstand zwischen den Tragrollen 20, 21 vergrößert sein, um eine erweiterte Ein- und Auslauflänge zur Verfügung zu stellen und damit eine spannungsarme Verformung des Antriebsgurt 31 sowie ein großflächiges Anschmiegen des Förderbandes 35 an den Antriebsgurt 31 zu ermöglichen.

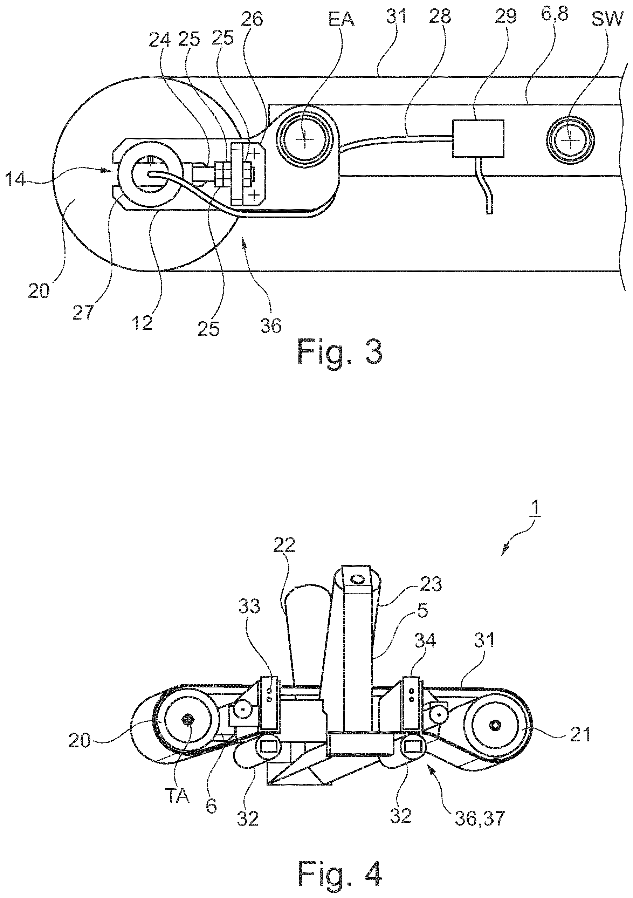

Eine erste Möglichkeit, den Antriebsgurt 31 zu spannen, ist in Figur 3 veranschaulicht. Am Arm 12 befindet sich in diesem Fall eine Halterung 26, welche als Blechprofil ausgeführt ist. In der Halterung 26 ist eine Gewindestange 24 mit Hilfe von Einstellmuttern 25 fixiert. Durch die Gewindestange 24 ist eine ringförmige Aufnahme 27, welche mit der Nabe 13 gekoppelt ist, verstellbar, sodass der Abstand zwischen der Einstellachse EA und der mit TA bezeichneten Tragrollenachse variierbar ist. Damit ist eine mit 36 bezeichnete Gurtspannvorrichtung, mit welcher die Spannung des Antriebsgurtes 31 variiert werden kann, gegeben. In nicht dargestellter Weise kann der Abstand zwischen den Achsen EA, TA alternativ oder unterstützend zu einem Feststellmechanismus durch einen Federmechanismus variierbar sein.

Ein der Energie- und Signalübertragung dienendes Kabel 28 ist mittig durch die Nabe 13 hindurch geführt und mit dem den Stator 16 sowie den Rotor 19 umfassenden, in Fig. 3 nicht im Detail dargestellten Direktantriebsmotor der Tragrolle 20 verbunden. In gleicher Weise ist der elektrische Anschluss der Tragrollen 20,21 auch bei allen übrigen Bauformen des Tragrollengestells 1 ausführbar.

Im Unterschied zur Gestaltung nach Figur 3 ist bei der Variante nach Figur 4 der Abstand zwischen den beiden Tragrollenachsen TA nicht verstellbar. Stattdessen existieren in diesem Fall Spannrollen 32, mit welchen der Antriebsgurt 31 spannbar ist. Die Spannrollen 32 sind Komponenten einer mit 37 bezeichneten Rollenspannvorrichtung, welche der Gurtspannvorrichtung 36 zuzurechnen ist.

Rastkonturen 33, welche in Figur 4 angedeutet sind und auch als Lochbild bezeichnet werden, ermöglichen die Feststellung der Spannrollen 32 und befinden sich im Ausführungsbeispiel nach Fig. 4 an Seitenblechen 34, welche fest mit den Seitenteilen 7, 8 des Schwenkrahmens 6 verbunden sind. Der Verstellbereich der Spannrollen 32 ist derart begrenzt, dass der Antriebsgurt 31 in allen Einstellungen mit ausreichendem Abstand über das Standblech 2, das heißt die Querstrebe des Tragrollengestells 1, geführt wird. Darüber hinaus haben die Spannrollen 32 den Effekt einer Vergrößerung der Kontaktflächen zwischen den Tragrollen 20, 21 und dem Antriebsgurt 31, wobei dieser Effekt umso mehr gegeben ist, je stärker die Spannrollen 32 angehoben und damit der Antriebsgurt 31 gespannt ist. Dank der Spannrollen 32 beträgt der Umschlingungswinkel zwischen Tragrolle 20, 21 und Antriebsgurt 31 mehr als 180°. Der Antriebsgurt 31 kann durch die Tragrollen 20, 21 nicht nur angetrieben, sondern bei Bedarf, beispielsweise zum Zweck eines Notstopps des Förderbandes 35, auch gebremst werden. Zu diesem Zweck kann zum einen ein bremsendes Moment durch den elektrischen Direktantrieb 16, 19 erzeugt werden und zum anderen mittels einer optionalen, nicht dargestellten mechanischen Bremse ein auf die Tragrolle 20, 21 wirkendes Bremsmoment erzeugt werden.

### Bezugszeichenliste

- 1: Tragrollengestell
- 2: Standblech, Querstrebe
- 3: Halteblech
- 4: Halteblech
- 5: Standrahmen
- 6: Schwenkrahmen
- 7: Seitenteil
- 8: Seitenteil
- 9: Querstück
- 10: Querstück
- 11: Querstück
- 12: Arm
- 13: Nabe, Achsende
- 14: Halteschlitz, Gabelaufnahme
- 15: Tragrollenmantel
- 16: Stator
- 17: Wicklung
- 18: Permanentmagnet
- 19: Rotor, Hohlrotor
- 20: Tragrolle
- 21: Tragrolle
- 22: Seitliche Tragrolle
- 23: Seitliche Tragrolle
- 24: Gewindestange
- 25: Einstellmutter
- 26: Halterung, Blechprofil
- 27: Aufnahme, ringförmig
- 28: Kabel
- 29: Verbindungselement
- 30: Verbindungselement
- 31: Antriebsgurt
- 32: Spannrolle
- 33: Rastkontur
- 34: Seitenblech
- 35: Förderband
- 36: Gurtspannvorrichtung
- 37: Rollenspannvorrichtung

- EA: Einstellachse, Schwenkachse des Arms 12
- SW: Schwenkachse des Schwenkrahmens 6
- TA: Tragrollenachse, Rotationsachse der Tragrolle 20,21

## Patentansprüche

1. Tragrollengestell einer Förderbandanlage, mit einem Schwenkrahmen (6), an welchem mindestens zwei Tragrollen (20,21) gelagert sind, wobei zumindest eine dieser Tragrollen (20,21) einen elektrischen Eigenantrieb aufweist, wobei die am Schwenkrahmen (6) gelagerten Tragrollen (20,21) jeweils an Armen (12) gelagert sind, welche schwenkbar an Seitenteilen (7,8) des Schwenkrahmens (6) angelenkt sind, **dadurch gekennzeichnet, dass** der elektrische Eigenantrieb als getriebeloser Antrieb (16,19) ausgebildet ist, wobei zwei am Schwenkrahmen (6) gelagerte Tragrollen (20,21), von welchen mindestens eine elektrisch direkt angetrieben ist, von einem Antriebsgurt (31) umschlungen sind, dessen Spannung mittels einer Gurtspannvorrichtung (36) veränderbar ist, wobei der Abstand der Rotationsachse (TA) einer Tragrolle (20,21) von der Schwenkachse (EA) der zugehörigen Arme (12) einstellbar ist.

2. Tragrollengestell einer Förderbandanlage, mit einem Schwenkrahmen (6), an welchem mindestens zwei Tragrollen (20,21) gelagert sind, wobei zumindest eine dieser Tragrollen (20,21) einen elektrischen Eigenantrieb aufweist, **dadurch gekennzeichnet, dass** der elektrische Eigenantrieb als getriebeloser Antrieb (16,19) ausgebildet ist, wobei zwei am Schwenkrahmen (6) gelagerte Tragrollen (20,21), von welchen mindestens eine elektrisch direkt angetrieben ist, von einem Antriebsgurt (31) umschlungen sind, dessen Spannung mittels einer Gurtspannvorrichtung (36) veränderbar ist, die zwei neben der Schwenkachse (SW) des Schwenkrahmens (6) spielgelbildlich zur Schwenkachse (SW) angeordnete Spannrollen (32) umfasst, deren Positionierung jeweils variierbar ist.

3. Tragrollengestell nach Anspruch 1 oder 2, **dadurch gekennzeichnet, dass** der getriebelose Antrieb (16,19) als Außenläufermotor mit einem innenliegenden Stator (16) und einem drehfest mit dem Mantel der Tragrolle (20,21) verbundenen Hohlrotor (19) ausgebildet ist.

4. Tragrollengestell nach Anspruch 3, **dadurch gekennzeichnet, dass** der getriebelose Antrieb (16,19) als permanentmagneterregter Direktantriebsmotor ausgebildet ist.

5. Tragrollengestell nach einem der Ansprüche 1 bis 4, **dadurch gekennzeichnet, dass** zwei am Schwenkrahmen (6) gelagerte Tragrollen (20,21) elektrisch direkt angetrieben und elektronisch synchronisiert sind.

6. Tragrollengestell nach Anspruch einem der Ansprüche 1 bis 4, **dadurch gekennzeichnet, dass** lediglich eine der am Schwenkrahmen (6) gelagerten Tragrollen (20,21) elektrisch direkt angetrieben ist.

7. Tragrollengestell nach Anspruch 2, **dadurch gekennzeichnet, dass** die Positionierung jeder Spannrolle (32) durch eine Rollenspannvorrichtung (37), insbesondere automatische Spannvorrichtung, variierbar ist, wobei die Rollenspannvorrichtung (37) zwei am Schwenkrahmen (6) angelenkte Spannhebel (33) umfasst.

8. Tragrollengestell nach einem der Ansprüche 1 bis 7, **gekennzeichnet durch** zwei den Schwenkrahmen (6) flankierende, zum Schwenkrahmen (6) geneigt angeordnete, nicht angetriebene seitliche Tragrollen (22,23).

9. Tragrollengestell nach einem der Ansprüche 1 bis 8, **dadurch gekennzeichnet, dass** der Schwenkrahmen (6) in Relation zu einem diesen kippbar lagernden Standrahmen (5) höhenverstellbar, insbesondere automatisch höhenverstellbar, ist.

## Claims

1. Support roll stand of a belt conveyor system, comprising a pivoting frame (6) on which at least two support rollers (20, 21) are mounted, wherein at least one of these support rolls (20, 21) has a dedicated electric drive, wherein the support rolls (20, 21) mounted on the pivoting frame (6) are each mounted on arms (12) which are pivotably hinged on side parts (7, 8) of the pivoting frame (6), **characterized in that** the dedicated electric drive is designed as a gearless drive (16, 19), wherein two support rolls (20, 21) which are mounted on the pivoting frame (6) and at least one of which is directly driven electrically, have a drive belt (31) wrapped therearound, the tension of which can be varied by means of a belt tensioning device (36), wherein the distance of the axis of rotation (TA) of a support roll (20, 21) from the pivot axis (EA) of the associated arms (12) is adjustable.

2. The support roll stand of a belt conveyor system, comprising a pivoting frame (6) on which at least two support rollers (20, 21) are mounted, wherein at least one of these support rolls (20, 21) has a dedicated electric drive, **characterized in that** the dedicated electric drive is designed as a gearless drive (16, 19), wherein two support rolls (20, 21) mounted on the pivoting frame (6), at least one of which is electrically and directly driven, have a drive belt (31) wrapped therearound, the tension of which can be varied by means of a belt tensioning device (36) which comprises two tensioning rolls (32) which are arranged next to the pivot axis (SW) of the pivoting frame (6) in mirror image to the pivoting axis (SW) and the positioning of which can be varied in each case.

3. The support roll stand according to claim 1 or 2, **characterized in that** the gearless drive (16, 19) is designed as an external-rotor motor with an internal stator (16) and a hollow rotor (19) connected to the shell of the support roll (20, 21) in a rotationally fixed manner.

4. The support roll stand according to claim 3, **characterized in that** the gearless drive (16, 19) is designed as a permanent-magnet-excited direct-drive motor.

5. The support roll stand according to any one of claims 1 to 4, **characterized in that** two support rolls (20, 21) mounted on the pivoting frame (6) are electrically and directly driven and electronically synchronized.

6. A support roller stand according to any one of claims 1 to 4, **characterized in that** only one of the support rolls (20, 21) mounted on the pivoting frame (6) is electrically and directly driven.

7. The support roll stand according to claim 2, **characterized in that** the positioning of each tensioning roll (32) can be varied by a roll tensioning device (37), in particular an automatic tensioning device, wherein the roll tensioning device (37) comprises two tensioning levers (33) hinged on the pivoting frame (6).

8. The support roll stand according to any one of claims 1 to 7, **characterized by** two non-driven lateral support rolls (22, 23) which flank the pivoting frame (6) and are arranged at an angle to the pivoting frame (6).

9. The support roll according to any one of claims 1 to 8, **characterized in that** the pivoting frame (6) is height-adjustable, in particular automatically height-adjustable, in relation to a base frame (5) tiltably supporting it.

## Revendications

1. Châssis de rouleaux de support d'un système de bande transporteuse, pourvu d'un cadre pivotant (6), sur lequel sont logés au moins deux rouleaux de support {20, 21), au moins l'un desdits deux rouleaux de support (20, 21) comportant un auto-entraînement électrique, les rouleaux de support (20, 21) logés sur le cadre pivotant (6) étant logés chacun sur des bras (12), lesquels sont articulés de manière pivotante sur des parties latérales (7, 8) du cadre pivotant (6), **caractérisé en ce que** l'auto-entraînement électrique est conçu sous la forme d'un entraînement (16, 19) sans réducteur, deux rouleaux de support (20, 21) logés sur le cadre pivotant (6), dont au moins l'un est directement entraîné électriquement étant directement enlacés par une courroie d'entraînement (31) dont la tension est variable au moyen d'un dispositif tendeur (36) de courroie, l'écart entre l'axe de rotation (TA) d'un rouleau de support (20, 21) étant réglable par l'axe de pivotement (EA) des bras (12) associés.

2. Châssis de rouleaux de support d'un système de bande transporteuse, pourvu d'un cadre pivotant (6), sur lequel sont logés au moins deux rouleaux de support {20, 21), au moins l'un desdits deux rouleaux de support (20, 21) comportant un auto-entraînement électrique, **caractérisé en ce que** l'auto-entraînement électrique est conçu sous la forme d'un entraînement (16, 19) sans réducteur, deux rouleaux de support (20, 21) logés sur le cadre pivotant (6), dont au moins l'un est directement entraîné électriquement étant directement enlacés par une courroie d'entraînement (31) dont la tension est variable au moyen d'un dispositif tendeur (36) de courroie, qui comprend deux rouleaux tendeurs (32), placés à côté de l'axe de pivotement (SW) du cadre pivotant (6), en symétrie spéculaire par rapport à l'axe de pivotement (SW), dont le positionnement est respectivement variable.

3. Châssis de rouleaux de support selon la revendication 1 ou 2, **caractérisé en ce que** l'entraînement (16, 19) sans réducteur est conçu sous la forme d'un moteur à induit extérieur pourvu d'un stator (16) interne et d'un rotor creux (19), relié de manière solidaire en rotation avec l'enveloppe du rouleau de support (20, 21) .

4. Châssis de rouleaux de support selon la revendication 3, **caractérisé en ce que** l'entraînement (16, 19) sans réducteur est conçu sous la forme d'un moteur à entraînement direct excité par aimant permanent.

5. Châssis de rouleaux de support selon l'une quelconque des revendications 1 à 4, **caractérisé en ce que** deux rouleaux de support (20, 21) logés sur le cadre pivotant (6) sont directement entraînés électriquement et électroniquement synchronisés.

6. Châssis de rouleaux de support selon l'une quelconque des revendications 1 à 4, **caractérisé en ce que** seul l'un des rouleaux de support (20, 21) logés sur le cadre pivotant (6) est directement entraîné électriquement.

7. Châssis de rouleaux de support selon la revendication 2, **caractérisé en ce que** le positionnement de chaque rouleau tendeur (32) est variable par un dispositif tendeur (37) de rouleau, notamment un dispositif tendeur automatique, le dispositif tendeur (37) de rouleau comprenant deux leviers tendeurs (33) articulés sur le cadre pivotant (6).

8. Châssis de rouleaux de support selon l'une quelconque des revendications 1 à 7, **caractérisé par** deux rouleaux de support (22, 23) latéraux, non entraînés, flanquant le cadre pivotant (6), placés en inclinaison par rapport au cadre pivotant (6).

9. Châssis de rouleaux de support selon l'une quelconque des revendications 1 à 8, **caractérisé en ce qu'**en relation par rapport à un cadre de pose (5) le logeant de manière basculable, le cadre pivotant (6) est réglable en hauteur, notamment réglable en hauteur automatiquement.
